# NEUE EUROPÄISCHE PATENTSCHRIFT

(11) **EP 1 045 815 B2**
(45) Veröffentlichungstag und Bekanntmachung des Hinweises auf die Entscheidung über den Einspruch: **22.04.2009**
(45) Hinweis auf die Patenterteilung: 29.10.2003
(21) Anmeldenummer: 99946067.8
(22) Anmeldetag: 30.08.1999
(51) Int. Cl.: C01G 23/053, C03C 17/25, C23C 18/12

(54) **VERFAHREN ZUR ABSCHEIDUNG VON TITANOXID-SCHICHTEN UNTER VERWENDUNG VON LÖSLICHEN PULVERN**
METHOD FOR DEPOSITING TITANIUM OXIDE LAYERS USING SOLUBLE POWDERS
PROCEDE POUR DEPOSER DES COUCHES D'OXYDE DE TITANE AU MOYEN DE POUDRES SOLUBLES

(30) Priorität: 01.10.1998 DE 19845291
(43) Veröffentlichungstag der Anmeldung: 25.10.2000
(73) Patentinhaber: Fraunhofer-Gesellschaft zur Förderung der angewandten Forschung e.V., 80686 München (DE)
(72) Erfinder: LÖBMANN, Peer, D-97074 Würzburg (DE); JAHN, Rainer, D-97209 Veitshöchheim (DE); MERKLEIN, Stephan, D-63500 Seligenstadt (DE)
(74) Vertreter: Albrecht, Thomas
(86) Internationale Anmeldenummer: PCT/EP1999/006374
(87) Internationale Veröffentlichungsnummer: WO 2000/020337

(56) Entgegenhaltungen:
- EP-A- 0 314 166
- EP-A- 0 884 320
- WO-A1-96/34829
- DE-A- 19 802 392
- LOBMANN P ET AL: "Lead zirconate-titanate films prepared from soluble powders" 9TH INTERNATIONAL WORKSHOP ON GLASSES AND CERAMICS HYBRIDS AND NANOCOMPOSITES FROM GELS. SOL-GEL 97', SHEFFIELD, UK, 31 AUG.-5 SEPT. 1997, Bd. 13, Nr. 1-3, Seiten 827-831, XP000865729 Journal of Sol-Gel Science and Technology, 1998, Kluwer Academic Publishers, Netherlands ISSN: 0928-0707
- SCOLAN E.; SANCHEZ C.: 'Synthesis and Characterization of Surfaceprotected Nanocrystalline Titania Particles' CHEM.MATER Bd. 10, 1998, Seiten 3217 - 3223
- HOEBBEL D.; REINERT T.; SCHMIDT H.; ARPAC E.: 'On the Hydrolytic Stability of Organic Ligands in Al-,Ti-and Zr-Alkoxide complexes' JOURNAL OF SOLGEL SCIENCE AND TECHNOLOGY Bd. 10, 1997, Seiten 115 - 126
- Jahresbericht 1993 des Instituts für Neue Materialen gem. GmbH. Seiten 113-115 (Anlage 4)
- Berechnung Titangehalt von Teilchen aus D1 (Anlage 5)

## Beschreibung

Die Erfindung betrifft ein Verfahren zur Abscheidung von Titanoxid-Schichten auf beliebigen Substraten. Insbesondere betrifft die Erfindung ein Sol-Gel-Verfahren, bei dem zunächst ein lösliches Pulver hergestellt wird, das in vielen Lösungsmitteln und Lösungsmittelgemischen wieder aufgelöst werden kann. Die aus dem Pulver hergestellte Beschichtungslösung kann bei der Herstellung unter anderem von elektrochromen Bildschirmen, optischen Reflexionsschichten, photokatalytischen Schichten und Photoanoden verwendet werden.

Die Verwendung von TiO₂ für solche Zwecke ist beispielsweise in den folgenden Veröffentlichungen beschrieben:

T. Ohzuko, T. Hirai, Electrochemica Acta, 27 (1982), 1263; H. Pulker, Thin film Science and Technology, Elsevier, Amsterdam (1984), Band 6; und J. Livage, in Better Ceramics Through Chemistry, MRS, Pittsburgh, PA (1988), 717.

Die photokatalytische Reinigung von Abwässern ist eine weitere zukunftsträchtige Anwendung dieses Materials (vgl. K. Kato, A. Tsuzuki, Y. Torii, H. Taoda, T. Kato, Y. Butsugan, J. Mat. Sci., 30 (1995), 837 und K. Kato, A. Tsuzuki, Y. Torii, H. Taoda, T. Kato, Y. Butsugan, J. Mat. Sci., 29 (1994), 5911). Gegenüber physikalischen oder physikalisch/chemischen Abscheidungsmethoden wie Sputtern, Verdampfen, chemical vapor deposition und metal-organic decomposition bietet die naßchemische Herstellung über den Sol-Gel-Prozeß eine Vielzahl von Vorteilen: Es sind keine kostenaufwendigen Beschichtungsapparaturen mit Vakuumtechnik erforderlich, es lassen sich leicht große Flächen beschichten, und auch die Innenseite von zylindrischen Substraten ist für Beschichtungslösungen gut zugänglich. Die notwendigen Prozeßtemperaturen sind im Vergleich zu klassischen oxidkeramischen Verfahren niedrig, was die Beschichtung von Metallen oder Glassubstraten erlaubt. Solche Verfahren sind beispielsweise in Sol-Gel Science, The Physics and Chemistry of Sol-Gel Processing (Academic Press, Boston, 1990) beschrieben.

Die EP-A-0 314 166 betrifft ein Verfahren zur Herstellung von monodispersen keramischen Pulvern durch Umsetzung von hydrolysierbaren Metallverbindungen mit Wasser in Anwesenheit eines Komplexbildners. Beispielsweise wird ein Titanalkoholat mit Wasser und einem Komplexbildner, wie zum Beispiel Acetylaceton, umgesetzt.

Löbmann P. et al: "Lead zirconate-titanate films prepared from soluble powders", 9th International Workshop on Glasses and Ceramics Hybrids and Nanocomposites from Gels. Sol-Gel 97', Sheffield, UK, 31. Aug. - 5. Sept. 1997, Bd. 13, Nr, 1-3, Seiten 827-831, Journal of Sol-Gel Science and Technology, 1998, Kluwer Academic Publishers, Netherlands ISSN: 0928-0707 beschreibt die Beschichtung von Substraten mit Bleizirkonat-Titanat-Filmen.

Beim Sol-Gel-Verfahren eingesetzte Beschichtungslösungen werden in der Regel aus Metall- und Übergangsmetallalkoholaten hergestellt. Da diese Verbindungen nicht hydrolysestabil sind, ist deren Lagerfähigkeit unter Normalbedingungen begrenzt.
Auch die chemische Modifikation der Alkoxide durch Komplexbildner führt nicht immer zu einer für industrielle Anwendungen befriedigenden Stabilisierung der Lösungen.

Der Erfindung liegt daher die Aufgabe zugrunde, ein Verfahren zur Abscheidung von Titanoxid-Schichten bereitzustellen, das die vorgenannten Nachteile nicht aufweist. Der Erfindung liegt weiterhin die Aufgabe zugrunde, ein Verfahren für die Abscheidung von TiO₂ bereitzustellen, welche die Abscheidung mit einer Schichtdicke über 150 nm innerhalb eines Beschichtungsschrittes ermöglicht. Dabei soll das Verfahren die großflächige Beschichtung von Substraten unterschiedlicher Zusammensetzung (verschiedene Gläser, keramische Substrate, Stahl) und variabler Geometrie (Flachproben, Rohre) erlauben.

Gegenstand der Erfindung ist ein Verfahren zur Herstellung von Titanoxid-Schichten, welches die folgenden Stufen umfaßt:
(i) Herstellung eines löslichen, titanhaltigen Pulvers durch:
   (a) Umsetzung eines Titanalkoholats der allgemeinen Formel Ti(OR)₄, in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen, mit einer oder mehreren polaren Verbindungen mit komplexierenden, chelatisierenden Eigenschaften,
   (b) Erhitzen der Lösung,
   (c) Versetzen der Lösung mit Wasser, gegebenenfalls in Anwesenheit eines Katalysators,
   (d) Einengen der Lösung bis zum Erhalten eines Pulvers,
(ii) Lösen des Pulvers unter Bildung eines Sols,
(iii) Beschichtung eines Substrats mit dem Sol, und
(iv) Tempern des beschichteten Substrats.

Gemäß einer bevorzugten Ausführungsform dieses Verfahrens werden Titanalkoholate der allgemeinen Formel Ti(OR)₄ eingesetzt, in der R für einen geradkettigen oder verzweigten Alkylrest mit 2 bis 6 Kohlenstoffatomen steht. Des weiteren ist es bevorzugt, wenn sich einer oder mehrere Reste OR der vorgenannten Formel von Oxoestern, β-Diketonen, Carbonsäuren, Ketocarbonsäuren oder Ketoalkoholen ableiten. Besonders bevorzugt ist es, wenn sich der Rest OR von Acetylaceton ableitet. Beispiele für geeignete Titanalkoholate sind Ti(OEt)₄, Ti(Oi-Pr)₄, Ti(On-Pr)₄ und Ti(AcAc)₂(Oi-Pr)₂.

Anstatt direkt eine Beschichtungslösung zu synthetisieren, wird erfindungsgemäß zunächst ein lösliches titanhaltiges Pulver hergestellt. Dabei wird ein Titanalkoholat mit einer polaren, komplexierenden und chelatisierenden Verbindung umgesetzt. Solche Verbindungen sind beispielsweise Diketone, β-Ketoester, Acetylaceton, Glykolether, Diole, mehrwertige Alkohole, Aminoalkohole, Glycerin, Hydroxydiole, Aminothiole, Dithiole, Diamine oder Mischungen derselben.

Besonders bevorzugt ist die Verwendung von Diketonen, insbesondere von 1,3-Diketonen, wie Acetylaceton.

Die polare komplexierende und chelatisierende Verbindung wird bei dem erfindungsgemäßen Verfahren in einer Menge von 0,5 bis 20 mol, vorzugsweise 0,5 bis 3 mol/mol, Titanalkoholat eingesetzt.

Nach der Umsetzung des Titanalkoholats mit der polaren komplexierenden und chelatisierenden Verbindung wird die erhaltene Lösung auf eine Temperatur im Bereich von Raumtemperatur bis Siedepunkt des Lösungsmittels, vorzugsweise auf 80 bis 100°C über einen Zeitraum bis zu 24 Stunden, vorzugsweise über einen Zeitraum von 0,5 bis 2 Stunden, erhitzt.

Anschließend versetzt man die Lösung mit einer Menge von 0,5 bis 20, vorzugsweise 1 bis 3 mol H₂O pro Mol Titanalkoholat, gegebenenfalls in Gegenwart eines Katalysators (H₃O⁺, OH⁻) bzw. verdünnten anorganischen oder organischen Säuren oder Laugen, wie HNO₃, HCl, NaOH oder NH₃, bzw. verdünnten Lösungen von Metallsalzen, wie NaBF₄, und engt das Gemisch vorzugsweise unter reduziertem Druck ein. Dabei wird ein pulverförmiger Feststoff erhalten, der einen Titanoxidgehalt von 30 bis 55 Gew.-% aufweist.

Das erfindungsgemäße Pulver ist unbegrenzt an Luft lagerfähig.

Das erfindungsgemäße Pulver kann in zahlreichen Lösungsmitteln oder Lösungsmittelgemischen wieder gelöst und somit zur Herstellung einer Beschichtungslösung zur Abscheidung von Titanoxid-Schichten verwendet werden, die ebenfalls Gegenstand der Erfindung ist. Geeignete Lösungsmittel sind Alkohole, Diole, Diolether, Amine, Wasser und Gemische davon. Durch die Wahl der Lösungsmittel bzw. Lösungsmittelgemische lassen sich wichtige Eigenschaften der Beschichtungslösung, wie Feststoffgehalt und Viskosität, gezielt einstellen und auf das Beschichtungsverfahren und Substrat abstimmen.

Geeignete Alkohole sind aliphatische Alkohole, insbesondere Methanol, Ethanol, Isopropanol und Butanol.

Geeignete Diolether sind z.B. Methoxyethanol, Butoxyethanol oder Isopropoxyethanol.

Geeignete Diole sind solche der allgemeinen Formel HO(CH₂)ₙOH, in der n für eine ganze Zahl von 2 bis 8 steht, wie z.B. Ethandiol, Propandiol, Butandiol usw. Bei dem erfindungsgemäßen Verfahren können auch höherwertige Alkohole bzw. Polyole, wie z.B. Glycerin, eingesetzt werden.

Geeignete Amine sind Mono-, Di- oder Trialkylamine, deren Alkylgruppen gegebenenfalls durch eine oder mehrere OH-Gruppe(n) substituiert sein können. Bevorzugte Amine weisen die allgemeine Formel NRₓR'₃₋ₓ auf, worin R und R' gleich oder verschieden sein können und für Methyl, Ethyl, Hydroxyethyl und Wasserstoff stehen können und x eine ganze Zahl von 0 bis 3 bedeutet.

Vorzugsweise enthalten die erfindungsgemäßen Beschichtungslösungen Wasser.

Ganz besonders bevorzugt sind Beschichtungslösungen, die als Lösungsmittel ein Gemisch aus Propandiol, Triethanolamin und Wasser enthalten, wobei die besten Resultate mit Beschichtungslösungen erzielt werden, die die vorgenannten Lösungsmittel in einem Gewichtsverhältnis von 60:10:30 bei einem Feststoffgehalt von 15 % Titandioxid enthalten.

Zur Herstellung der erfindungsgemäßen Beschichtungslösung wird das Lösungsmittel bzw. Lösungsmittelgemisch mit dem titanhaltigen Pulver gemischt. Vorzugsweise wird dabei das Lösungsmittel vorgelegt und das Pulver portionsweise zugegeben.

Anschließend wird das Gemisch auf eine Temperatur im Bereich von Raumtemperatur bis zum Siedepunkt des Lösungsmittelgemisches, vorzugsweise im Bereich von 80 bis 100°C über einen Zeitraum von 10 bis 60 Minuten erhitzt, so daß eine kolloidale Lösung (Sol) resultiert.

Durch Zugabe von Siliciumalkoholaten zu den so hergestellten TiO₂-Solen läßt sich die Brechzahl der Dünnschichten im Bereich zwischen 1,5 und 2,4 frei wählen. Das bevorzugte Verhältnis von Titanalkoholat zu Siliciumalkoholat beträgt 9:91. Geeignete Siliciumalkoholate, die beigemischt werden können, sind Siliciumalkoholate der allgemeinen Formel Si(OR)₄, in der die Reste R gleich oder verschieden sind und geradkettige, verzweigtkettige oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen.

Bevorzugte Siliciumalkoholate sind Si(OEt)₄ und Si(OMe)₄.

Je nach Mischungsverhältnis von titanhaltigem Pulver zu Lösungsmittel bzw. Lösungsmittelgemisch beträgt der Titanoxidgehalt des Sols 0,1 bis 30%, vorzugsweise etwa 15% (Massenprozent).

Eine Vielzahl von Substrattypen ist durch die erfindungsgemäßen Sole sehr gut benetzbar. Durch Einfachbeschichtung und anschließendes Tempern bei einer Temperatur von 550°C lassen sich in Abhängigkeit von dem Beschichtungsverfahren TiO₂-Schichten mit einer Dicke bis zu 0,8 um abscheiden. Geeignete Beschichtungsverfahren sind dem Fachmann an sich bekannt und beispielsweise in Sol-Gel Science, The Physics and Chemistry of Sol-Gel Processing, Academic Press (1990) beschrieben.

Überraschenderweise ist bei Verwendung der erfindungsgemäßen Beschichtungslösung vor der thermischen Auslagerung kein Trocknungsschritt des Naßfilms notwendig. Bei Schichtdicken über 0,4 µm weisen die Schichten eine netzartige Rißstruktur auf. Überraschenderweise weisen diese Schichten eine gute Haftung selbst auf Borosilicatglas auf.

Werden den Beschichtungslösungen Hilfsstoffe wie Polyethylenglycol zugesetzt, lassen sich feine Strukturen in die Schichten einprägen (vgl. N. Toghe et al., J. Non-Cryst. Solids, 100 (1988), 501).

Weiterhin ist es möglich, Dotierung in die Titanoxid-Schichten dadurch einzubringen, daß entsprechende Komponenten in dem Lösungsmittel bzw. Lösungsmittelgemisch bei der Herstellung der erfindungsgemäßen Beschichtungslösung eingebracht werden. Solche Komponenten sind beispielsweise in den Lösungsmittelgemischen lösliche Verbindunge von Übergangs- und inneren Übergangselementen, wie Eisen, Nickel, Mangan und Neodym.

Ein wesentlicher Vorteil des erfindungsgemäßen Verfahrens sowie des dabei verwendeten titanhaltigen Pulvers und der daraus hergestellten Beschichtungslösung ist darin zu sehen, daß das Pulver in bezug auf TiO₂ einen hohen Feststoffgehalt aufweist und an Luft unbegrenzt lagerfähig ist. Das Pulver löst sich sehr leicht rückstandsfrei in zahlreichen Lösungsmitteln und Lösungsmittelgemischen. Viele für das Beschichtungsverfahren wesentliche Soleigenschaften lassen sich durch die Wahl des Lösungsmittels/Lösungsmittelgemisches gezielt einstellen, ohne daß die Pulversynthese verändert werden muß. Zudem sind die mit einer Einfachbeschichtung erreichbaren Schichtdicken sehr hoch.

Die Erfindung wird durch die nachfolgenden Beispiele näher erläutert:

### Anwendungsbeispiel 1: Pulversynthese

Zu 284 g Titan-n-propylat werden 100 g Acetylaceton unter Rühren getropft. Die Lösung wird eine Stunde auf 80°C erhitzt. Nach der Zugabe von 54 g deionisiertem Wasser wird der Ansatz am Rotationsverdampfer bei reduziertem Druck eingeengt. Es resultiert ein pulverförmiger, gelbroter Feststoff mit einem Titanoxidgehalt von 43 Masse-%.

### Anwendungsbeispiel 2: Solherstellung

Zu 356 g einer Lösungsmittelmischung von Propandiol, Triethanolamin und Wasser in einem Massenverhältnis von 60:10:30 werden 185 g des Pulvers in kleineren Portionen gegeben. Nach Erhitzen auf 50°C für eine Stunde resultiert ein klares Sol. Der Titanoxidgehalt beträgt 15 Masse-%.

### Anwendungsbeispiel 3: Schichtpräparation

Das Sol wird in ein vertikal ausgerichtetes Borosilicatrohr gefüllt, dessen untere Öffnung mit einem durchbohrten Stopfen verschlossen wurde. Durch Abpumpen erreicht man ein Absinken des Flüssigkeitsspiegels. Die resultierende Schichtdicke ist durch die Abpumpgeschwindigkeit einstellbar, bei 16 mm/min erreicht man 0,6 um dicke keramische Schichten. Direkt nach der Beschichtung wird das Rohr in einem Umluftofen 30 Minuten auf 550°C erhitzt.

Nach der thermischen Auslagerung bei 550°C liegt das Titanoxid als Anätas vor, die Schichten zeigen photokatalytische Aktivität bei Abbauversuchen mit der Modellsubstanz Dichloressigsäure.

Die Beschichtungssole lassen sich auch auf der Innenseite von rohrartigen Substraten abscheiden, indem der Boden mit einem durchbohrten Stopfen abgeschlossen wird, das Sol eingefüllt wird und durch Ablassen bzw. Abpumpen ein wohldefinierter Naßfilm auf dem Substrat zurückbleibt. Erstaunlicherweise lassen sich bei Rohrinnenbeschichtungen bessere Resultate bei höheren Abpumpgeschwindigkeiten erzielen als bei der Beschichtung von Flachproben.

## Patentansprüche

1. Sol-Gel-Verfahren zur Herstellung von Titanoxid-Schichten, **dadurch gekennzeichnet, dass** es die folgenden Stufen umfasst:
(i) Herstellung eines löslichen, titanhaltigen Pulvers durch:
(a) Umsetzung eines Titanalkoholats der allgemeinen Formel Ti(OR)₄, in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen, mit einer oder mehreren polaren Verbindungen mit komplexierenden, chelatisierenden Eigenschaften,
(b) Erhitzen der Lösung auf 80 bis 100°C,
(c) Versetzen der Lösung mit Wasser, gegebenenfalls in Anwesenheit eines Katalysators,
(d) Einengen der Lösung bis zum Erhalten eines Pulvers,
(ii) Lösen des Pulvers unter Bildung eines Sols,
(iii) Beschichtung eines Substrats mit dem Sol, und
(iv) Tempern des beschichteten Substrats.

2. Verfahren nach Anspruch 1, **dadurch gekennzeichnet, dass** man als polare Verbindung mit komplexierenden, chelatisierenden Eigenschaften Diketone, β-Ketoester, Acetylaceton, Glykolether, Diole, mehrwertige Alkohole, Aminoalkohole, Glyerin, Hydroxydiole, Aminothiole, Dithiole, Diamine oder Mischungen derselben verwendet.

3. Verfahren nach Anspruch 2, **dadurch gekennzeichnet, dass** man als polare Verbindung mit komplexierenden, chelatisierenden Eigenschaften Acetylaceton und als Titanalkoholat Titan-n-propylat verwendet.

4. Verfahren nach den Ansprüchen 1 bis 3, **dadurch gekennzeichnet, dass** man das titanhaltige Pulver in einem Lösungsmittel, ausgewählt aus der Gruppe bestehend aus Alkohol, Diolen, Diolethern, Aminen und Wasser oder Gemischen daraus, löst.

5. Verfahren nach Anspruch 4, **dadurch gekennzeichnet, dass** man als Lösungsmittel ein Gemisch aus Propandiol, Triethanolamin und Wasser verwendet.

6. Verfahren nach den Ansprüchen 1 bis 5, **dadurch gekennzeichnet, dass** man als Substrat Glas-, Keramik- und/oder Metall-Substrate verwendet.

7. Verfahren nach Anspruch 6, **dadurch gekennzeichnet, dass** man als Substrat Borosilicatglas verwendet.

8. Verfahren nach den Ansprüchen 1 bis 6, **dadurch gekennzeichnet, dass** man als Substrat eine Flachprobe oder ein Rohr verwendet.

9. Verfahren nach den Ansprüchen 1 bis 8, **dadurch gekennzeichnet, dass** man dem Sol Hilfsstoffe, insbesondere Polyethylenglycol, zusetzt.

10. Titanhaltiges Pulver zur Abscheidung von Titanoxid-Schichten, erhältlich durch
(a) Umsetzung eines Titanalkoholats mit einem Diketon,
(b) Erhitzen der Lösung auf 80 bis 100°C,
(c) Versetzen der Lösung mit Wasser, gegebenenfalls in Anwesenheit eines Katalysators,
(d) Einengen der Lösung bis zum Erhalten eines Pulvers.

11. Titanhaltiges Pulver nach Anspruch 10, **dadurch gekennzeichnet, dass** es einen Titangehalt von 30 bis 55 Gew.-% besitzt.

12. Beschichtungslösung zur Herstellung von Titanoxid-Schichten, umfassend eine kolloidale Lösung des titanhaltigen Pulvers nach Anspruch 10 oder 11 in einem Alkohol, einem Diol, einem Amin, Wasser oder Gemischen davon.

13. Beschichtungslösung nach Anspruch 12, **dadurch gekennzeichnet, dass** ihr nach dem Auflösen des titanhaltigen Pulvers Siliciumalkoholat der allgemeinen Formel Si(OR)₄, in der die Reste R gleich oder verschieden sind und geradkettige, verzweigtkettige oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweise, zugesetzt worden sind.

14. Beschichtungslösung nach Anspruch 12 oder 13, **dadurch gekennzeichnet, dass** sie zusätzlich lösliche Polymer, insbesondere Polyethylenglykol, umfasst.

15. Beschichtungslösung nach den Ansprüchen 12 bis 14, **dadurch gekennzeichnet, dass** sie 15 Gew.-% TiO₂ enthält.

16. Beschichtungslösung nach den Ansprüchen 12 bis 15, **dadurch gekennzeichnet, dass** das Lösungsmittelgemisch Propandiol, Triethanolamin und Wasser umfasst.

17. Beschichtungslösung nach Anspruch 16, **dadurch gekennzeichnet, dass** das Gewichtsverhältnis von Propandiol, Triethanolamin und Wasser 60:10:30 ist.

18. Verwendung des titanhaltigen Pulvers nach Anspruch 10 oder 11 oder der Beschichtungslösung nach den Ansprüchen 12 bis 17 bei der Herstellung von elektrochromen Bildschirmen, optischen Reflexionsschichten und Photoanoden.

19. Verwendung des titanhaltigen Pulvers nach Anspruch 10 oder 11 oder der Beschichtungslösung nach den Ansprüchen 12 bis 17 zur Herstellung mikrostrukturierter Schichten.

20. Verwendung des titanhaltigen Pulvers nach den Ansprüchen 10 und 11 bei der photokatalytischen Reinigung von Abwässern.

## Claims

1. Sol gel process for the production of titanium oxide layers, **characterised in that** it comprises the following steps:
(i) production of a soluble powder containing titanium by:
(a) converting a titanium alcoholate with the general formula Ti(OR)₄, in which the residues R are the same or different and constitute straight-chain, branched or cyclic alkyl or alkenyl residues with 1 to 10 carbon atoms, which possibly have one or more carbonyl and/or ester and/or carboxyl functions, with one or more polar compounds with complexing, chelating properties,
(b) heating the solution to a temperature of 80°-100°C,
(c) adding water to the solution, possibly in the presence of a catalyst,
(d) concentrating the solution to small volume until a powder is obtained,
(ii) dissolving the powder to form a sol,
(iii) coating a substrate with the sol, and
(iv) annealing the coated substrate.

2. Process according to Claim 1, **characterised in that** diketones, b-keto-ester, acetyl acetone, glycol ether, diols, multivalent alcohols, amino alcohols, glycerine, hydroxy diols, amino thiols, dithiols, diamines or mixtures thereof are used as the polar compound with complexing, chelating properties.

3. Process according to Claim 2, **characterised in that** acetyl acetone is used as the polar compound with complexing, chelating properties and titanium-n-propylate is used as titanium alcoholate.

4. Process according to Claims I to 3, **characterised in that** the powder containing titanium is dissolved in a solvent selected from the group comprising alcohols, diols, diol ethers, amines and water or mixtures thereof.

5. Process according to Claim 4, **characterised in that** a mixture of propane diol, triethanolamine and water is used as solvent.

6. Process according to Claims 1 to 5, **characterised in that** glass, ceramic and/or metal substrates are used as substrate.

7. Process according to Claim 6, **characterised in that** borosilicate glass is used as substrate.

8. Process according to Claims 1 to 6, **characterised in that** a flat sample or a tube is used as substrate.

9. Process according to Claims 1 to 8, **characterised in that** auxiliary agents, in particular polyethylene glycols, are added to the sol.

10. Powder containing titanium for the deposition of titanium oxide layers, which may be obtained by
(a) converting a titanium alcoholate with a diketone,
(b) heating the solution to a temperature of 80°-100°C,
(c) adding water to the solution, possibly in the presence of a catalyst,
(d) concentrating the solution to small volume until a powder is obtained.

11. Powder containing titanium according to Claim 10, **characterised in that** it has a titanium content of 30 to 55% by weight.

12. Coating solution for the production of titanium oxide layers, comprising a colloidal solution of the power containing titanium according to Claim 10 or 11 in an alcohol, a diol, an amine, water or mixtures thereof.

13. Coating solution according to Claim 12, **characterised in that** silicon alcoholate with the general formula Si(OR)₄, in which the residues R are the same or different and constitute straight-chain, branched-chain or cyclic alkyl or alkenyl residues with 1 to 10 carbon atoms, which possibly have one or more carbonyl and/or ester and/or carboxyl functions, was added to said coating solution after dissolution of the powder containing titanium.

14. Coating solution according to Claim 12 or 13, **characterised in that** it additionally comprises soluble polymers, in particular polyethylene glycols.

15. Coating solution according to Claims 12 to 14, **characterised in that** it contains 15% by weight of TiO₂.

16. Coating solution according to Claims 12 to 15, **characterised in that** the solvent mixture comprises propane diol, triethanolamine and water.

17. Coating solution according to Claim 16, **characterised in that** the weight ratio of propane diol, triethanolamine and water is 60:10:30.

18. Use of the powder containing titanium according to Claim 10 or 11 or of the coating solution according to Claims 12 to 17 in the production of electrochromic screens, optical reflective layers and photoanodes.

19. Use of the powder containing titanium according to Claim 10 or 11 or of the coating solution according to Claims 12 to 18 for the production of microstructured layers.

20. Use of the powder containing titanium according to Claims 10 and 11 in the photocatalytic purification of effluents.

## Revendications

1. Procédé sol-gel de production de couche de dioxyde de titane, **caractérisé en ce qu'** il comprend les étapes suivantes:
(i) production d'une poudre soluble, contenant du titane par
(a) réaction d'un alcoolate de titane de formule générale Ti(OR)₄ dans laquelle les restes R sont identiques ou différents et représentent des restes alkyle ou alkényle à chaîne droite, ramifiés ou cycliques ayant de 1 à 10 atomes de carbone, qui possèdent éventuellement une ou plusieurs fonctions carbonyle et/ou ester et/ou carboxyle, avec un ou plusieurs composés polaires ayant des propriétés complexantes et chelatantes,
(b) chauffage de la solution à une température de 80° à 100°C,
(c) mélange de la solution avec de l'eau, éventuellement en présence d'un catalyseur,
(d) concentration de la solution jusqu'à obtention d'une poudre,
(ii) dissolution de la poudre avec formation d'un sol,
(iii) revêtement d'un substrat avec le sol, et
(iv) recuit du substrat revêtu.

2. Procédé selon la revendication 1,
**caractérisé en ce qu'**
on utilise comme composé polaire ayant des propriétés complexantes, chelatantes, des dicétones, des β-citoesters, l'acétylacétone, un éther de glycol, des diols, des alcools plurifonctionnels, des aminoalcools, le glycérol, des hydroxydiols, des aminothiols, des dithiols, des diamines ou des mélanges de ceux-ci.

3. Procédé selon la revendication 2,
**caractérisé en ce qu'**
on utilise comme composé polaire, ayant des propriétés complexantes chelatantes, de l'acétylacétone et comme alcoolate de titane le n-propylate de titane.

4. Procédé selon l'une quelconque des revendications 1 à 3,
**caractérisé en ce qu'**
on dissout la poudre contenant du titane dans un solvant choisi dans le groupe qui consiste en un alcool, en des diols, des éthers de diol, des amines et de l'eau ou des mélanges de ceux-ci.

5. Procédé selon la revendication 4,
**caractérisé en ce qu'**
on utilise comme solvant, un mélange à base de propanediol, de triéthanolamine et d'eau.

6. Procédé selon l'une quelconque des revendications 1 à 5,
**caractérisé en ce qu'**
on utilise comme substrats des substrats à base de verre, de céramique et/ou de métal.

7. Procédé selon la revendication 6,
**caractérisé en ce qu'**
on utilise comme substrat un verre borosilicaté.

8. Procédé selon l'une quelconque des revendications 1 à 6,
**caractérisé en ce qu'**
on utilise comme substrat un échantillon plat ou un tube.

9. Procédé selon l'une quelconque des revendications 1 à 8,
**caractérisé en ce qu'**
on ajoute au sol des substances auxiliaires en particulier du polyéthylèneglycol.

10. Poudre contenant du titane en vue de la déposition de couches d'oxyde de titane qu'on peut obtenir par:
a) réaction d'un alcoolate de titane avec une dicétone,
b) chauffage de la solution à une température de 80° à 100°C,
c) mélange de la solution avec de l'eau, éventuellement en présence d'un catalyseur,
d) concentration de la solution jusqu'à obtention d'une poudre.

11. Poudre contenant du titane selon la revendication 10,
**caractérisé en ce qu'**
elle possède une teneur en titane de 30 à 55% en poids.

12. Solution de revêtement pour l'obtention de couches d'oxyde de titane, comprenant une solution colloïdale d'une poudre contenant du titane selon la revendication 10 ou la revendication 11, dans un alcool, un diol, une amine, dans l'eau ou dans des mélanges de ceux-ci.

13. Solution de revêtement selon la revendication 12,
**caractérisé en ce qu'**
à celle-ci après la dissolution de la poudre contenant du titane, des alcoolates de silicium de formule générale Si(OR)₄ dans lesquels les restes R sont identiques ou différents et représentent des restes alkyle ou alkényle à chaîne droite, à chaîne ramifiée ou cycliques ayant de 1 à 10 atomes de carbone, qui possèdent éventuellement une ou plusieurs fonctions carbonyle et/ou ester, et/ou carboxyle, ont été ajoutés.

14. Solution de revêtement selon l'une quelconque des revendications 12 ou 13,
**caractérisé en ce qu'**
elle comprend en supplément des polymères solubles, en particulier du polyéthylèneglycol.

15. Solution de revêtement selon l'une quelconque des revendications 12 à 14,
**caractérisé en ce qu'**
elle contient 15% en poids de TiO₂.

16. Solution de revêtement selon l'une quelconque des revendications 12 à 15,
**caractérisé en ce que**
le mélange de solvants comprend du propanediol, de la triéthanolamine et de l'eau.

17. Solution de revêtement selon la revendication 16,
**caractérisé en ce que**
le rapport pondéral du propanediol, de la triéthanolamine et l'eau est de 60:10:30.

18. Utilisation de la poudre contenant du titane selon l'une quelconque des revendications 10 ou 11, ou de la solution de revêtement selon l'une quelconque des revendications 12 à 17, en vue de la production d'écrans de protection électrochromes, de couches de réflexion optiques et de photoanodes.

19. Utilisation de la poudre contenant du titane selon l'une quelconque des revendications 10 ou 11, ou de la solution de revêtement selon l'une quelconque des revendications 12 à 17, en vue de la production de couches microstructurées.

20. Utilisation de la poudre contenant du titane selon l'une quelconque des revendications 10 et 11, dans l'épuration photocatalytique des eaux usées.
